# FASCICULE DE BREVET EUROPEEN

(11) **EP 2 205 063 B1**
(45) Date de publication et mention de la délivrance du brevet: **28.11.2012**
(21) Numéro de dépôt: 08871492.8
(22) Date de dépôt: 24.10.2008
(51) Int. Cl.: A01J 25/06

(54) **OUTIL DE TRANCHAGE DE CAILLÉ**
SCHNEIDWERKZEUG FÜR KÄSEBRUCH
CURDS CUTTING TOOL

(30) Priorité: 30.10.2007 FR 0758705
(43) Date de publication de la demande: 14.07.2010
(73) Titulaire: Equipements Techniques des Industries Alimentaires et Connexes-TECNAL, 79000 Niort (FR)
(72) Inventeur: PAGNAULT, Gérard, 86600 Saint-Sauvant (FR)
(74) Mandataire: Gaillarde, Frédéric F. Ch.
(86) Numéro de dépôt international: PCT/FR2008/001500
(87) Numéro de publication internationale: WO 2009/092873

(56) Documents cités:
- WO-A-92/00665
- CH-A5- 666 384
- FR-A- 2 291 833
- FR-A- 2 766 329
- US-A- 3 988 011

## Description

### DOMAINE TECHNIQUE DE L'INVENTION

L'invention se rapporte aux opérations de tranchage du caillé de lait. Elle s'applique au domaine de l'agro-alimentaire et plus particulièrement au domaine de la fromagerie, notamment industrielle.

### ÉTAT DE LA TECHNIQUE

Lors du traitement du caillé de lait utilisé pour l'élaboration du fromage, on réalise communément un tranchage du caillé contenu dans des bassines ou circulant dans une tubulure avec des outils de tranchage, afin de constituer un grand nombre de cubes qui augmentent la surface d'échange et favorisent l'exsudation du sérum. Pour constituer de tels cubes ou dés, il est nécessaire de trancher le caillé dans trois directions plus ou moins perpendiculaires. L'opération de tranchage est effectuée habituellement soit manuellement, soit sur un ou plusieurs postes mécanisés, à l'aide de deux types d'outils : un premier outil à lames et fils croisés formant une « raquette » épousant le plus fidèlement possible le profil intérieur des parois de la bassine ou de la tubulure, et un deuxième outil à lames ou à lames et fils parallèles.

À titre indicatif, pour le tranchage en bassine, le procédé de tranchage habituellement utilisé est le suivant :
- le premier outil est déplacé selon l'axe longitudinal de la bassine pour former des bandes de caillé s'étendant parallèlement à cet axe;
- le deuxième outil est ensuite déplacé transversalement à l'axe longitudinal pour trancher les bandes horizontales de caillé précédemment réalisées, formant ainsi des parallélépipèdes dont le nombre est fonction du nombre de lames et de fils des premier et deuxième outils.

Les deux types d'outils utilisés comportent généralement des pièces de rigidification ou de support des lames qui se trouvent plongées dans le caillé. Cela est naturellement le cas pour l'outil raquette, qui est pourvu d'un cadre. Mais l'outil à lames parallèles est également généralement renforcé par un ou plusieurs raidisseurs reliant les lames et situés dans des positions intermédiaires entre la base de l'outil (qui reste hors du caillé) et l'extrémité libre des lames, ou par un cadre de maintien. Ces éléments de maintien et de raidissement provoquent des déchirures du caillé qui entraînent la formation de particules lors de l'introduction, du déplacement et de l'extraction des outils de tranchage. Au moment du moulage et pendant l'égouttage, ces particules de caillé, appelées également « fines », vont suivre le sérum, ce qui représente une perte de matière non négligeable se traduisant par un mauvais rendement matière de l'installation.

Pour rigidifier les lames sans avoir recours à un raidisseur ou à un cadre, on pourrait naturellement les épaissir, mais un tel épaississement provoquerait une compression du caillé entre les lames, avec un risque de délitage du caillé. De plus, il alourdirait la structure et rendrait plus difficile le maniement de l'outil. Enfin, tout surcroît de matière a un coût non négligeable.

Pour minimiser les pertes engendrées par les outils raquettes, il a été proposé dans le document FR 2 766 329 d'effectuer le tranchage dans des bassines de section trapézoïdale au lieu de la section rectangulaire de l'art antérieur, ce qui permet de remplacer la raquette par deux outils de tranchage à lames parallèles, les lames du premier outil étant parallèles à un premier côté de la bassine et celles du deuxième outil étant parallèles au deuxième côté de la bassine.

Par ailleurs, on note que les lames utilisées pour les outils de tranchage traditionnels sont généralement planes. Dans le document US 3 988 011 est toutefois décrit un outil de tranchage de caillé utilisé dans une cuve cylindrique et comportant des lames incurvées formant un arc d'environ 70°, afin de créer une turbulence maîtrisée et une agitation du caillé, qui semblent être recherchées dans le procédé de transformation exposé dans ce document. On comprend donc qu'un tel outil engendre des fines.

### OBJET DE L'INVENTION

La présente invention vise à remédier aux inconvénients de l'état de la technique et à minimiser la formation de particules de caillé lors de l'opération de tranchage.

Pour ce faire est proposé selon un premier aspect de l'invention un outil de tranchage de caillé comportant un ensemble de lames de tranchage parallèles à un même plan de tranchage, fixées par une extrémité à un support commun et alignées suivant un axe longitudinal du support faisant un angle avec le plan de tranchage, formant ainsi un peigne de lames. De manière remarquable, chaque lame présente deux portions latérales disposées chacune dans un plan parallèle au plan de tranchage, ainsi qu'une portion médiane non plane, et de préférence ondulée, reliant les deux portions latérales. Une telle ondulation des lames permet de les rigidifier et, par conséquent, de limiter le nombre d'éléments raidisseurs (traverses ou cadre) nécessaires au maintien des lames, ce qui diminue d'autant la formation de fines, voire d'éliminer totalement ces raidisseurs. Naturellement, la rigidification des lames permet également le cas échéant de diminuer l'épaisseur des lames à longueur données, ou d'augmenter la longueur des lames à épaisseur donnée.

De manière surprenante, il s'avère que la portion centrale non plane des lames ne détruit pas la cohérence des tranches de caillé, de sorte que les lames non planes ne génèrent pas plus de fines que des lames planes, notamment du fait que les portions latérales sont parallèles au plan de tranchage.

Selon un mode particulièrement avantageux, les deux portions latérales de chaque lame sont coplanaires. Cette disposition permet d'éviter que la position du caillé après le passage de l'outil soit translatée latéralement par rapport à sa position initiale.

Avantageusement, on peut prévoir que les lames présentent chacune un plan de symétrie, ce qui permet un mouvement alternatif de tranchage.

Préférentiellement, l'une des portions latérales de l'outil de tranchage forme un bord d'attaque comportant un tranchant en biseau. Ce tranchant en biseau est asymétrique et prolongé sur sa largeur par une bavure d'affutage. La réalisation des lames de l'outil est alors simplifiée et le prolongement du tranchant par une bavure contribue à un tranchage du caillé fin et précis. Par ailleurs, l'angle formé par le tranchant en biseau et le plan des portions latérales de la lame est compris entre 15° et 45°, selon la finesse de tranchage que l'on souhaite obtenir.

Selon un mode de réalisation de l'outil particulièrement avantageux, les lames sont disposées sur le support de manière équidistante et s'étendent transversalement à l'axe longitudinal du support. Ainsi, le tranchage est régulier et n'est pas altéré par le support. En effet, seules les lames de tranchage entrent en contact avec le caillé.

De manière avantageuse, l'outil présente une épaisseur constante et inférieure à 2 millimètres et une longueur supérieure à 700mm. La diminution de l'épaisseur des lames met en évidence la bonne rigidité de la lame.

De manière avantageuse, les lames sont liées entre elles uniquement par le support commun.

L'outil décrit est applicable aussi bien à une installation de tranchage en bassine qu'à une installation de tranchage en continu. Utilisé seul, il remplace avantageusement les outils à lames parallèles de l'état de la technique. Doublé, il peut également remplacer un outil « raquette ». Il suffit alors en effet d'orienter le deuxième outil selon l'invention dans une direction faisant un angle avec le premier outil, pour reproduire le maillage recherché. Ainsi, la succession de deux outils de tranchage permet un tranchage dans les directions longitudinale et transversale, tout comme le ferait une raquette.

Selon un autre aspect de l'invention est proposé un outil de tranchage de caillé comportant un ensemble de lames de tranchage parallèles à un même plan de tranchage, fixées par une extrémité à un support commun et alignées suivant un axe longitudinal du support faisant un angle avec le plan de tranchage, formant ainsi un peigne de lames. De manière remarquable, les lames ont une section non plane dans un plan perpendiculaire au plan de tranchage et ne sont liées entre elles que par le support commun. Le moment quadratique des lames est élevé, et rend inutile une liaison entre les lames autre que le support commun. Les lames n'étant liées que par une extrémité destinée à rester hors du caillée, on n'a plus les pertes de caillé constatées avec les dispositif de l'état de la technique, qui comprennent des raidisseurs ou cadres pénétrant dans le caillé.

### BRÈVE DESCRIPTION DES FIGURES

D'autres caractéristiques et avantages de l'invention ressortiront à la lecture de la description qui suit, en référence aux figures annexées, qui illustrent:
- la figure 1, une vue schématique d'une installation mettant en oeuvre un outil de tranchage de caillé selon un premier mode de réalisation de l'invention,
- la figure 2, une section transversale de quelques lames de l'outil de la figure 1,
- la figure 3, une vue schématique une installation mettant en oeuvre un outil de tranchage de caillé selon un deuxième mode de réalisation de l'invention;
- la figure 4 une section transversale d'une lame d'un outil selon une variante de réalisation de l'invention;
- la figure 5 une vue schématique d'une installation mettant en oeuvre un outil de tranchage de caillé selon un troisième mode de réalisation de l'invention;
- la figure 6 une vue d'ensemble de l'installation de la figure 5.

Pour plus de clarté, les éléments identiques ou similaires des différents modes de réalisation sont repérés par des signes de référence identiques sur l'ensemble des figures.

### EXEMPLE DE RÉALISATION

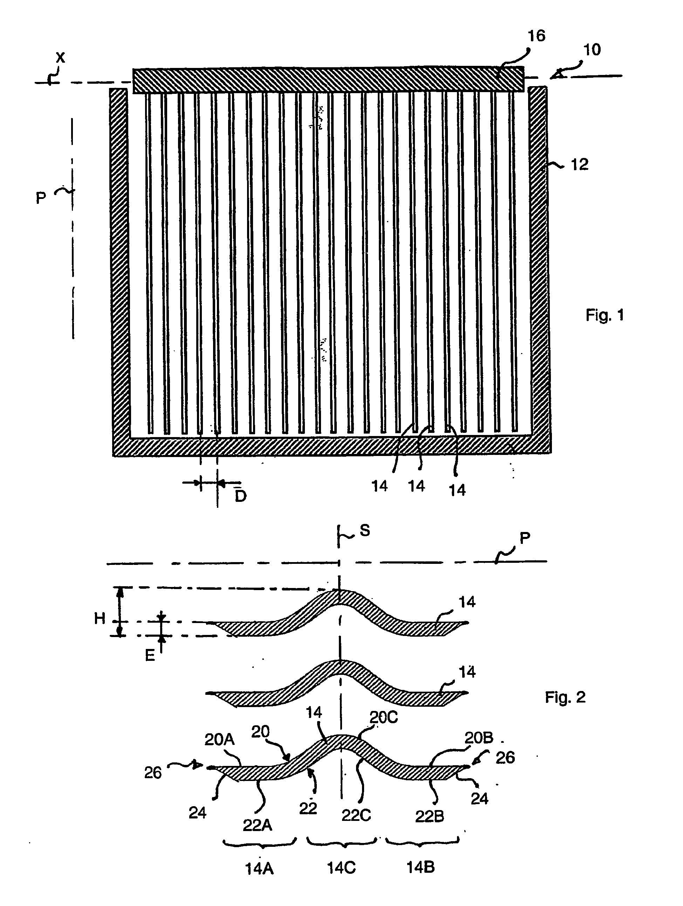

Sur la figure 1 est représenté un outil de tranchage 10 plongé dans une bassine 12 et comportant un ensemble de lames 14 fixées à une traverse 16 commune de support, par exemple par soudage ou par tout autre moyen. Les lames sont alignées le long de l'axe X de la traverse (situé dans le plan de la figure 1) et forment un peigne. Les lames sont toutes parallèles à un même plan de tranchage P perpendiculaire au plan des figures 1 et 2 et qui forme un angle avec l'axe de la traverse, en l'espèce un angle droit. En l'occurrence, le plan de tranchage est le plan parallèlement auquel l'outil doit se déplacer pendant les opérations de tranchage.

Comme illustré en détail sur la figure 2, chaque lame 14 présente deux portions latérales planes 14A, 14B disposées dans un même plan parallèle au plan de tranchage, ainsi qu'une portion médiane 14C sortant du plan des portions latérales, de telle sorte que chaque lame présente un profil de section transversale incurvée. Plus précisément, chaque lame comporte une face antérieure 20, une face postérieure 22 ainsi que deux arêtes en biseau 24. La face antérieure 20 se décompose en deux facettes latérales planes 20A, 20B parallèles au plan de tranchage, et une partie médiane ondulée 20C sortant du plan de tranchage et reliant les parties 20A, 20B. De même, la face postérieure se décompose en deux facettes latérales planes 22A, 22B parallèles au plan de tranchage, et une partie médiane ondulée 22C sortant du plan de tranchage. Les biseaux 24 sont formés par une facette sensiblement plane et faisant un angle compris entre 15° et 45° avec le plan de tranchage et de préférence un angle de l'ordre de 30° à 40°. Au niveau de l'arête proprement dite, c'est-à-dire l'intersection entre la face antérieure et le biseau 24, est constituée une bavure d'affutage 26 qui forme un prolongement de matière recourbé d'épaisseur très faible comparée à l'épaisseur de la lame. Cette partie très fine de l'arête s'avère particulièrement efficace pour trancher le caillé.

La hauteur totale H de la lame, mesurée entre le plan des facettes latérales postérieures et le point le plus éloigné de la partie médiane de la face antérieure, est de l'ordre de 3 à 4 fois l'épaisseur E de la lame. Du fait de leur ondulation, les lames présentent un moment quadratique élevé, donc une rigidité à la flexion accrue par rapport à des lames planes, de sorte qu'aucune traverse intermédiaire n'est nécessaire pour maintenir le positionnement relatif des lames, même pour des tailles de lames dépassant 600mm. En pratique, de très bons résultats ont été obtenus pour des épaisseurs E de lame de l'ordre de 1,5 mm, une hauteur H de lame de l'ordre de 5 mm et des longueurs de 500mm, 700mm et 900mm, les lames étant distantes les unes des autres d'un pas D d'environ 10 à 20mm.

Comme illustré sur la figure 2, les lames présentent un plan de symétrie S, ce qui facilite leur montage et permet un fonctionnement bidirectionnel de l'outil.

De manière surprenante, l'ondulation du profil des lames ne nuit pas au tranchage et ne fait pas perdre sa cohérence au caillé. En effet, la tranche de caillé située entre deux lames ondule elle-même, guidée par la face antérieure de la première lame et la face postérieure de la seconde. On comprend donc qu'il est souhaitable que les lames soient toutes identiques, et que les ondulations soient toutes alignées, afin que la distance entre deux lames adjacentes, mesurée parallèlement à l'axe du support, soit en tous points identique (excepté au niveau des biseaux).

Dans la mesure où le peigne se déplace linéairement parallèlement au plan de tranchage, il est également souhaitable que les deux portions latérales 14A, 14B de chaque lame, qui constituent l'une un bord d'attaque et l'autre un bord de fuite, soient orientées toutes deux parallèlement au plan de tranchage.

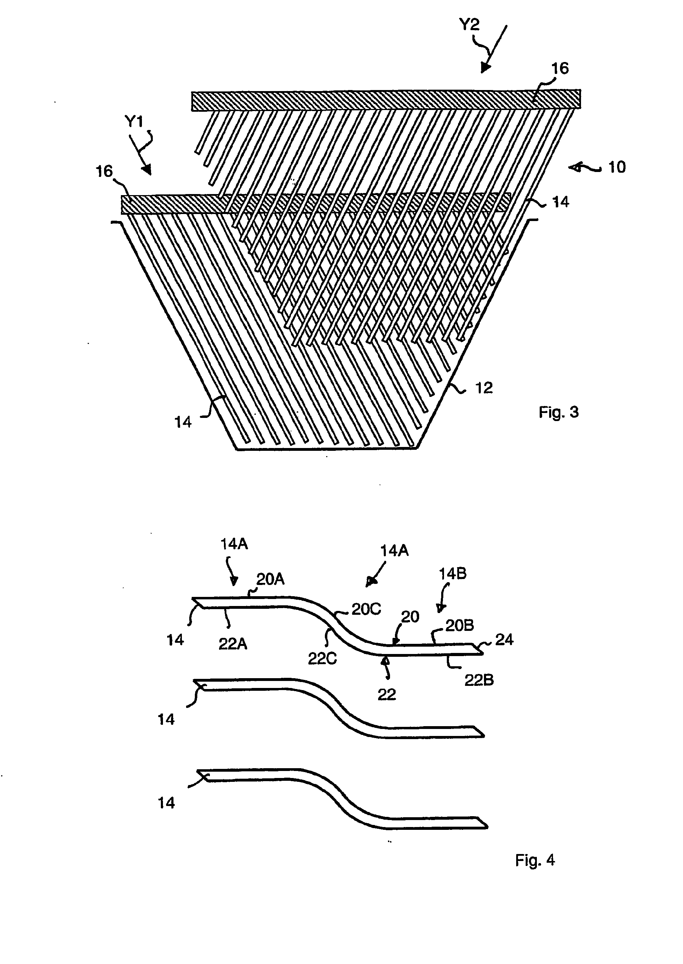

Sur la figure 3 est représenté une installation de tranchage qui met en oeuvre un outil pour remplacer un outil « raquette ». L'outil est pourvu de lames 14 fixées par une extrémité à une traverse 16. Les lames sont toutes parallèles à un même plan de tranchage incliné d'environ 45° à 60° par rapport à l'axe de la traverse. L'outil est plongé dans une bassine 12 de profil trapézoïdal suivant une première direction Y1 puis effectue un tranchage par translation dans une direction perpendiculaire au plan de la figure. À l'issue de cette première phase, l'outil est ressorti du caillé, retourné, puis replongé dans le caillé suivant une direction Y2 pour y être déplacé suivant une direction perpendiculaire au plan de la figure. Ce procédé de tranchage est décrit en détail dans le brevet FR 2 766 329.

Naturellement, diverses modifications sont possibles. Il est possible de profiler les lames de manière non symétrique, comme illustré par la variante de la figure 4. Les lames de l'outil de la figure 4 ont en effet des portions médianes 14A, 14B parallèles au plan de tranchage, mais non coplanaires. On peut également prévoir un tranchant en V au lieu du tranchant en biseau asymétrique de l'exemple de réalisation. Si l'outil n'est utilisé que dans un sens, on peut également ne prévoir de tranchant que sur une arête des lames. On peut également, si l'épaisseur des lames est faible, totalement éliminer le tranchant des lames et prévoir au contraire un rebord de lame arrondi.

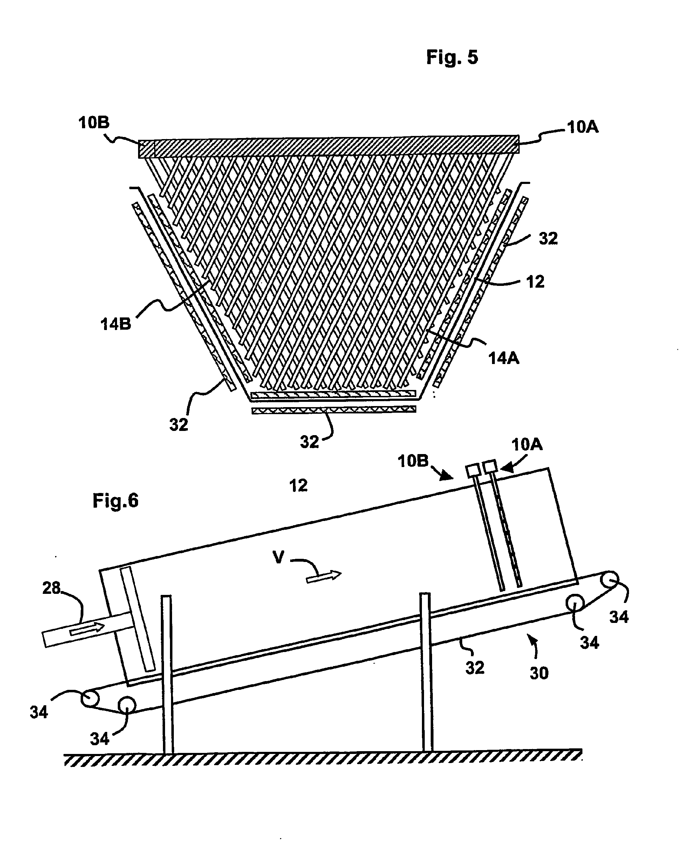

En disposant deux outils de tranchage selon l'invention perpendiculairement l'un par rapport à l'autre à quelques centimètres de distance, on peut également remplacer un outil raquette, par exemple dans une application de tranchage de caillé circulant en continu, comme décrit dans le brevet FR 2 491 725. On a représenté de manière très schématique sur les figures 5 et 6 une telle installation, qui comporte une gouttière de profil trapézoïdal 12, dans laquelle sont plongés deux outils 10A, 10B similaires à l'outil utilisé dans le mode de réalisation de la figure 3 et pourvus chacun de lames 14A, 14B disposées suivant deux directions différentes. Contrairement aux modes de réalisation précédents, les outils de tranchage sont ici fixes par rapport au récipient 12, et le caillé est injecté à une extrémité de la gouttière par un tube d'injection 28 et mû à faible vitesse dans la gouttière suivant une direction V perpendiculaire au plan de la figure 5, par l'intermédiaire d'un convoyeur 30 comportant trois tapis roulant 32 entraîné par des rouleaux 34.

Naturellement, le profil de la gouttière peut être différent. On peut notamment mettre en oeuvre une gouttière de section semi-circulaire, ce qui permet de mettre en oeuvre un tapis roulant unique épousant la forme du fond de gouttière.

## Revendications

1. Lame (14) pour outil de tranchage (10) de caillé, **caractérisée en ce que** chaque lame présente deux portions latérales planes (14A, 14B) disposées chacune dans un plan parallèle au plan de tranchage (P), ainsi qu'une portion médiane non plane (14C) reliant les deux portions latérales.

2. Lame selon la revendication 1, **caractérisée en ce que** ladite portion médiane est ondulée.

3. Lame selon l'une des revendications 1 ou 2, **caractérisée en ce que** les deux portions latérales de chaque lame sont coplanaires.

4. Lame selon l'une quelconque des revendications précédentes, **caractérisée en ce qu'**elle présente un plan de symétrie (S).

5. Lame selon l'une des revendications 1 ou 2, **caractérisée en ce que** lesdites portions latérales (14A, 14B) sont non coplanaires

6. Lame selon l'une quelconque des revendications précédentes, **caractérisée en ce qu'**au moins une des portions latérales forme un bord d'attaque comportant un tranchant (24).

7. Lame selon la revendication 6, **caractérisée en ce que** le tranchant est en biseau asymétrique.

8. Lame selon la revendication 7, **caractérisé en ce que** l'angle formé par le tranchant en biseau et le plan transversal est compris entre 15° et 45°.

9. Lame selon l'une quelconque des revendications 6 à 8, **caractérisée en ce que** le tranchant est prolongé par une bavure d'affûtage (26).

10. Lame selon l'une quelconque des revendications précédentes, **caractérisée en ce qu'**elle présente une épaisseur (E) constante.

11. Lame selon l'une quelconque des revendications précédentes, **caractérisée en ce qu'**elle présente une épaisseur (E) inférieure à 2 millimètres et une longueur supérieure à 700 millimètres.

12. Outil de tranchage (10) de caillé comportant un ensemble de lames de tranchage (14) conformes à l'une quelconque des revendications précédentes, parallèles à un même plan de tranchage (P), fixées à un support commun (16) par une de leurs extrémités, et alignées suivant un axe longitudinal (X) du support faisant un angle avec le plan de tranchage de manière à former un peigne de lames.

13. Outil de tranchage selon la revendication 12, **caractérisé en ce que** les lames parallèles sont équidistantes.

14. Outil de tranchage de caillé selon l'une des revendications 12 ou 13, **caractérisé en ce que** l'axe du support est perpendiculaire au plan de tranchage.

15. Outil de tranchage selon l'une quelconque des revendications 12 à 14, **caractérisé en ce que** les lames ne sont liées entre elles que par le support commun.

## Claims

1. A blade (14) for a tool (10) for cutting curd, **characterized in that** each blade has two planar side portions (14A, 14B), each positioned in a plane parallel to the cutting plane (P), as well as a non-planar middle portion (14C) connecting both side portions.

2. The blade according to claim 1, **characterized in that** said middle portion is corrugated.

3. The blade according to one of claims 1 or 2, **characterized in that** both side portions of each blade are coplanar.

4. The blade according to any of the preceding claims, **characterized in that** it has a plane of symmetry (S).

5. The blade according to one of claims 1 or 2, **characterized in that** said side portions (14A, 14B) are non-coplanar.

6. The blade according to any of the preceding claims, **characterized in that** at least one of the side portions forms a leading edge including a cutting edge (24).

7. The blade according to claim 6, **characterized in that** the cutting edge is asymmetrically beveled.

8. The blade according to claim 7, **characterized in that** the angle formed by the beveled cutting edge and the transverse plane is comprised between 15° and 45°.

9. The blade according to any of claims 6 to 8, **characterized in that** the cutting edge is extended with a sharpening burr (26).

10. The blade according to any of the preceding claims, **characterized in that** it has a constant thickness (E).

11. The blade according to any of the preceding claims, **characterized in that** it has a thickness (E) of less than 2 millimeters and a length of more than 700 millimeters.

12. A tool (10) for cutting curd including a set of cutting blades (14) according to any of the preceding claims, parallel to a same cutting plane (P), attached to a common support (16) by one of their ends, and aligned along a longitudinal axis (X) of the support forming an angle with the cutting plane so as to form a comb of blades.

13. The cutting tool according to claim 12, **characterized in that** the parallel blades are equidistant.

14. The curd cutting tool according to one of claims 12 or 13, **characterized in that** the axis of the support is perpendicular to the cutting plane.

15. The cutting tool according to any of claims 12 to 14, **characterized in that** the blades are only connected together through the common support.

## Patentansprüche

1. Klinge (14) für Schneidwerkzeug (10) für Geronnenes, **dadurch gekennzeichnet, dass** jede Klinge zwei ebene seitliche Abschnitte (14A, 14B), die jeweils in einer parallelen Ebene zur Schneidebene (P) angeordnet sind, und einen nicht ebenen mittleren Abschnitt (14C), der die zwei seitlichen Abschnitte verbindet, aufweist.

2. Klinge nach Anspruch 1, **dadurch gekennzeichnet, dass** der mittlere Abschnitt gewellt ist.

3. Klinge nach einem der Ansprüche 1 oder 2, **dadurch gekennzeichnet, dass** die zwei seitlichen Abschnitte jeder Klinge koplanar sind.

4. Klinge nach einem der vorangehenden Ansprüche, **dadurch gekennzeichnet, dass** sie eine Symmetrieebene (S) aufweist.

5. Klinge nach einem der Ansprüche 1 oder 2, **dadurch gekennzeichnet, dass** die seitlichen Abschnitte (14A, 14B) nicht koplanar sind.

6. Klinge nach einem der vorangehenden Ansprüche, **dadurch gekennzeichnet, dass** mindestens einer der seitlichen Abschnitte einen Angriffsrand bildet, der eine Schneidkante (24) aufweist.

7. Klinge nach Anspruch 6, **dadurch gekennzeichnet, dass** die Schneidkante asymmetrisch schräg ist

8. Klinge nach Anspruch 7, **dadurch gekennzeichnet, dass** der Winkel, der von der schrägen Schneidkante und der transversalen Ebene gebildet wird, zwischen 15° und 45° inklusive beträgt.

9. Klinge nach einem der Ansprüche 6 bis 8, **dadurch gekennzeichnet, dass** die Schneidkante durch einen Schleifgrat (26) verlängert wird.

10. Klinge nach einem der vorangehenden Ansprüche, **dadurch gekennzeichnet, dass** sie eine konstante Dicke (E) aufweist.

11. Klinge nach einem der vorangehenden Ansprüche, **dadurch gekennzeichnet, dass** sie eine Dicke (E) unter 2 Millimeter und eine Länge über 700 Millimeter aufweist.

12. Schneidwerkzeug (10) für Geronnenes, das eine Gruppe von Schneidklingen (14) nach einem der vorangehenden Ansprüche aufweist, die zu einer selben Schneidebene (P) parallel sind, an einem ihrer Enden an einem gemeinsamen Halter (16) befestigt sind und gemäß einer Längsachse (X) des Halters ausgerichtet sind, der derart einen Winkel mit der Schneidebene bildet, das ein Klingenkamm gebildet wird.

13. Schneidwerkzeug nach Anspruch 12, **dadurch gekennzeichnet, dass** die parallelen Klingen denselben Abstand haben.

14. Schneidwerkzeug nach einem der Ansprüche 12 oder 13, **dadurch gekennzeichnet, dass** die Achse des Halters senkrecht zur Schneidebene ist.

15. Schneidwerkzeug nach einem der Ansprüche 12 bis 14, **dadurch gekennzeichnet, dass** die Klingen nur durch den gemeinsamen Halter miteinander verbunden sind.
